Europäisches Patentamt

**European Patent Office**

Office européen des brevets

(11) Numéro de publication : **0 059 126**
**B1**

(12)                   **FASCICULE DE BREVET EUROPÉEN**

(45) Date de publication du fascicule du brevet :
24.04.85

(21) Numéro de dépôt : **82400181.2**

(22) Date de dépôt : **04.02.82**

(51) Int. Cl.⁴ : **B 60 G 11/20**, F 16 F   1/16

(54) Dispositif d'ancrage d'une barre de torsion sur un bras oscillant en tôle.

(30) Priorité : **25.02.81 FR 8103724**

(43) Date de publication de la demande :
**01.09.82 Bulletin 82/35**

(45) Mention de la délivrance du brevet :
**24.04.85 Bulletin 85/17**

(84) Etats contractants désignés :
**DE GB IT**

(56) Documents cités :
DE-B- 1 269 903
FR-A-   939 941
FR-A- 1 041 607
FR-A- 2 226 296
GB-A-   608 346
GB-A-   935 811
US-A- 2 213 004
US-A- 2 596 922
US-A- 3 528 649
US-A- 4 200 165

(73) Titulaire : **AUTOMOBILES PEUGEOT**
**75, avenue de la Grande Armée**
**F-75116 Paris (FR)**

**AUTOMOBILES CITROEN**
**62 Boulevard Victor-Hugo**
**F-92200 Neuilly-sur-Seine (FR)**

(72) Inventeur : **Froumajou, Armand**
**Rue Docteur Laennec**
**F-95520 Osny (FR)**

(74) Mandataire : **Moncheny, Michel et al**
**c/o Cabinet Lavoix 2 Place d'Estienne d'Orves**
**F-75441 Paris Cedex 09 (FR)**

## Description

L'invention se rapporte au montage des bras oscillants en tôle destinés notamment aux suspensions de véhicules automobiles et sur lesquels doit être ancrée une barre de torsion parallèle ou sensiblement parallèle à leur axe d'oscillation, la torsion de la barre s'opposant à la rotation du bras provoquée par une force extérieure éloignée de l'axe. Plus précisément, l'invention est relative à un dispositif d'ancrage d'une barre de torsion sur un bras en tôle oscillant autour d'un axe solidaire du châssis et parallèle à celui de la barre de torsion, du type comprenant un levier rigide solidaire en rotation de l'extrémité de la barre de torsion et entraîné par les mouvements du bras.

Pour ancrer sur un bras une extrémité d'une barre de torsion, il est connu de donner à l'extrémité de la barre une forme cylindrique, par exemple une section carrée ou un contour crénelé ou dentelé, et de l'engager sans jeu dans un trou de forme complémentaire percé dans le bras ou, notamment quand celui-ci est en tôle, dans une pièce rigide solidaire du bras. Cette pièce est de préférence un levier métallique d'épaisseur notable dont une extrémité est munie du trou non cylindrique recevant la barre de torsion, et dont l'autre extrémité est en appui ou fixée sur le bras. Cependant, dans les agencements connus de ce type (voir par exemple le brevet des Etats-Unis d'Amérique N° 2 596 922 et la demande de brevet FR-A-2 226 296), le positionnement du levier nécessite des pièces supplémentaires de fixation ou de guidage, ce qui augmente le poids et le prix de revient.

L'invention a pour but de réaliser l'ancrage d'un embout non cylindrique d'une barre de torsion sur un bras en tôle au moyen d'un levier avec un mode de positionnement simple et peu encombrant du levier sur le bras.

A cet effet, l'invention a pour objet un dispositif d'ancrage du type précité, caractérisé en ce que le levier prend appui sur une surface du bras parallèle à l'axe d'oscillation du bras, comme connu en soi, et est traversé par cet axe avec jeu faible ou nul dans la direction parallèle à cette surface.

Les moyens de positionnement en rotation du levier indiqués ci-dessus sont connus en soi, par exemple d'après les brevets FR-A-939 941, US-A-2 213 004 et GB-A-935 811.

Le levier peut en outre être maintenu latéralement par les moyens de fixation du bras sur l'axe d'oscillation.

Dans un mode de réalisation avantageux, le bras a une structure en caisson définie par deux flasques traversés par l'axe d'oscillation et deux rebords solidaires de ces flasques, et le levier est logé entre les deux flasques, éventuellement en servant d'entretoise entre ceux-ci.

L'invention est exposée ci-après en détail à l'aide du dessin annexé, qui en représente seulement deux modes d'exécution. Sur ce dessin :

la Figure 1 est une vue en coupe longitudinale, prise en coupe suivant la ligne 1-1 de la Fig. 3, d'une portion de bras oscillant muni d'un dispositif d'ancrage selon l'invention ;

la Figure 2 est une vue en coupe transversale prise suivant la ligne 2-2 de la Fig. 1 ;

la Figure 3 est une vue de dessus prise en coupe suivant la ligne 3-3 de la Fig. 1 ;

la Figure 4 est une vue analogue à la Fig. 3 d'une variante ;

la Figure 5 est une vue en coupe transversale prise suivant la ligne de la Fig. 4.

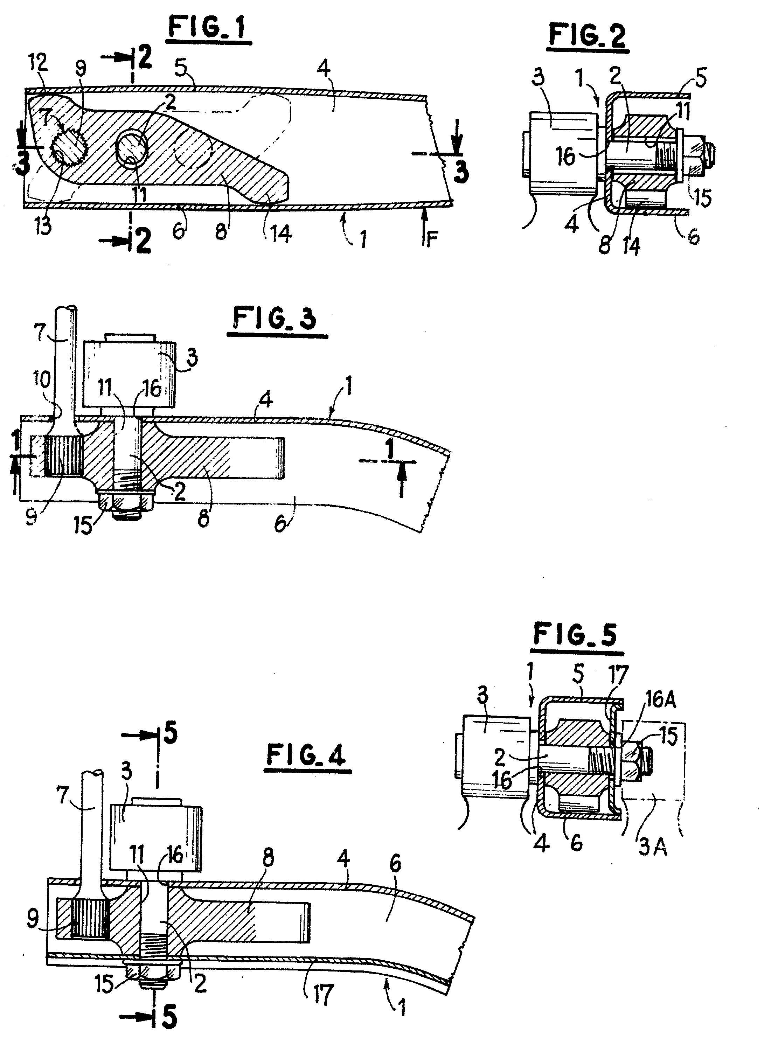

Les Fig. 1 à 3 représentent le montage d'un bras oscillant 1 en tôle sur un axe d'oscillation 2 porté par un palier fixe 3.

Le bras 1 a, au moins dans la région de l'axe 2, une section en C constituée d'un flasque 4 perpendiculaire à l'axe 2, traversé sans jeu par celui-ci et adjacent au palier 3, et de deux rebords 5, 6 perpendiculaires à ce flasque et à peu près parallèles entre eux. Pour la commodité de la description, on supposera l'axe 2 horizontal ainsi que les rebords 5 et 6, ce qui correspond au cas où le bras 4 est un bras de suspension de véhicule automobile, le palier 3 étant alors solidaire de la caisse du véhicule.

En service, le bras 1 est soumis à des efforts F verticaux dirigés vers le haut, appliqués en des points du bras éloignés de l'axe 2. Le rappel élastique du bras est assuré par une barre de torsion 7 parallèle à l'axe 2, par l'intermédiaire d'un levier 8.

La barre de torsion 7 présente une extrémité (non représentée) ancrée en un point fixe, par exemple de la caisse du véhicule considéré, et son autre extrémité 9, crénelée, traverse avec jeu un perçage 10 du flasque 4 pour pénétrer dans l'espace intérieur du bras 1.

Le levier 8 a une forme générale en S. Il présente un orifice 11 situé dans sa partie médiane, une première extrémité 12 en appui sur la face intérieure du rebord supérieur 5, un deuxième orifice 13 complémentaire de l'extrémité crénelée 9 de la barre de torsion et enfilé sur celle-ci, cet orifice 13 étant situé entre l'extrémité 12 et l'orifice 11, et une deuxième extrémité 14 en appui sur la face intérieure du rebord inférieur 6. L'orifice 11 a une forme oblongue, avec une dimension horizontale égale ou peu supérieure au diamètre de l'axe 2 et une dimension verticale supérieure à ce diamètre. Cet orifice 11 est enfilé sur l'axe 2, et un écrou 15 vissé sur l'extrémité libre filetée de l'axe 2 maintient le flasque 4 contre le palier 3 et le levier 8 contre la face intérieure de ce flasque.

L'épaisseur courante du levier 8 est suffisamment importante pour lui conférer la rigidité nécessaire au transfert des efforts, et cette épaisseur est encore accrue autour de l'axe 2 pour prendre une valeur du même ordre que la dimension transversale des rebords 5 et 6, de sorte que l'écrou 15 se trouve à peu près dans le plan d'extrémité de ces rebords.

L'effort F tend à faire tourner le bras 1 autour de l'axe 2 et applique, par action sur les extrémités 12 et 14 du levier 8, un couple de torsion à la barre 7, qui exerce un couple de rappel fonction de l'angle de rotation de son extrémité 9 autour de son propre axe.

La forme oblongue de l'orifice 11 assure le positionnement du levier 8 dans la direction longitudinale du bras 1 ; le flasque 4 comporte un orifice 16 traversé sans jeu par l'axe 2, de sorte que toute poussée verticale due à une force telle que F est transmise à l'axe 2 par le flasque 4. En variante, comme représenté aux Fig. 4 et 5, ce peut être l'orifice 16 qui est oblong dans le sens vertical, tandis que l'orifice médian 11 du levier 8 est circulaire et traversé à peu près sans jeu par l'axe 2. Dans ce cas, c'est le levier 8 qui transmet à l'axe 2 la poussée radiale due à une force telle que F.

Si l'effort F était dirigé en sens inverse, c'est-à-dire de haut en bas, il faudrait soit faire porter l'extrémité 12 contre le rebord 6 et l'extrémité 14 contre le rebord 5, soit inverser la disposition du levier 8 et de la barre de torsion 7 par rapport à l'axe 2 comme représenté en traits mixtes à la Fig. 1. Pour un bras soumis à des sollicitations alternées, le levier 8 comporterait quatre extrémités telles que 12 et 14, alternativement en appui deux par deux contre les deux rebords 5 et 6, avec la barre 7 indifféremment d'un côté ou de l'autre de l'axe 2.

Dans chaque cas, on peut encore envisager de supprimer un appui sur deux du levier 8.

Les Fig. 4 et 5 montrent en outre un mode préféré de réalisation où le bras 1, pour être particulièrement rigide et mieux solidarisé de l'axe 2, comporte en outre un deuxième flasque vertical 17 fixé à l'extrémité des rebords 5 et 6, ce qui lui confère une structure en caisson. L'axe 2 traverse également un trou verticalement oblong 16A du flasque 17.

Le levier 8 est alors engagé dans le bras creux ainsi constitué par son extrémité ouverte située du côté gauche de la Fig. 4. La largeur maximale du levier est sensiblement égale à la distance séparant les deux flasques 4 et 17, de sorte qu'il sert d'entretoise entre ceux-ci et contribue à la rigidité du bras après serrage de l'écrou 15 de fixation du bras sur l'axe 2.

En variante, le bras 1 pourrait être porté par deux paliers 3 et 3A, comme esquissé en traits mixtes sur la Fig. 5, l'axe 2 étant alors prolongé en conséquence et l'écrou 15 supprimé.

Dans tous les cas, le levier 8 est maintenu latéralement et angulairement par des moyens existant pour d'autres fonctions : axe d'oscillation 2, écrou 15 de fixation du bras, flasques et rebord du bras 1. De plus, les contraintes subies par le bras en tôle sont réduites puisque les efforts qu'il transmet à la barre de torsion et à l'axe 2 s'appliquent par l'intermédiaire des extrémités du levier 8 sur des régions du bras notablement-espacées et dont la surface de contact peut être relativement étendue.

## Revendications

1. Dispositif d'ancrage d'une barre de torsion sur un bras en tôle oscillant autour d'un axe solidaire du châssis et parallèle à celui de la barre de torsion, du type comprenant un levier rigide (8) solidaire en rotation de l'extrémité de la barre de torsion (7) et entraîné par les mouvements du bras (1), caractérisé en ce que le levier (8) prend appui sur au moins une surface (5, 6) du bras (1) parallèle à l'axe d'oscillation (2) du bras, comme connu en soi, et est traversé par cet axe avec jeu faible ou nul dans la direction parallèle à cette surface.

2. Dispositif d'ancrage suivant la revendication 1, caractérisé en ce que le levier (8) présente pour chaque sens de rotation du bras (1) une région (12, 14) en appui sur une surface (5, 6) du bras parallèle à l'axe d'oscillation (2).

3. Dispositif d'ancrage suivant l'une des revendications 1 et 2, caractérisé en ce que le levier (8) est maintenu latéralement par des moyens (15) de fixation du bras sur l'axe d'oscillation (2).

4. Dispositif d'ancrage suivant l'une quelconque des revendications 1 à 3, caractérisé en ce que le bras (1) comporte un flasque (4) perpendiculaire à l'axe d'oscillation (2) et au moins un rebord (5, 6) parallèle à cet axe et constituant ladite surface d'appui du bras (1).

5. Dispositif d'ancrage suivant la revendication 4, caractérisé en ce que l'axe d'oscillation (2) traverse sans jeu l'un des deux éléments constitués par le flasque (4) du bras et le levier (8) et traverse l'autre de ces deux éléments avec un jeu dans la direction perpendiculaire à la surface d'appui (5, 6) du bras (1), la barre de torsion (7) possédant une liberté de mouvement par rapport au flasque (4).

6. Dispositif d'ancrage suivant l'une des revendications 4 et 5, dans lequel le bras (1) comporte un deuxième flasque (17) parallèle au premier (4) qui lui confère une structure er. caisson, caractérisé en ce que le levier (8) est logé entre les deux flasques.

7. Dispositif d'ancrage suivant la revendication 6, caractérisé en ce que le levier (8) sert d'entretoise entre les deux flasques (4, 17).

## Claims

1. A device for anchoring a torsion bar on a sheet metal arm pivotable about a shaft connected to the chassis and parallel to the axis of the torsion bar, of the type comprising a rigid lever (8) connected to rotate with the end of the torsion bar (7) and driven by the movements of the arm (1), characterised in that the lever (8) bears against at least one surface (5, 6) of the arm (1) parallel to the pivot shaft (2) of the arm, in the known manner, and this shaft extends through the lever with a small clearance or no clearance in the direction parallel to this surface.

2. An anchoring device according to claim 1, characterised in that the lever (8) has, for each direction of rotation of the arm (1), a region (12, 14) which bears against a surface (5, 6) of the arm parallel to the pivot shaft (2).

3. An anchoring device according to one of the claims 1 and 2, characterised in that the lever (8) is maintained laterally by means (15) fixing the arm to the pivot shaft (2).

4. An anchoring device according to any one of the claims 1 to 3, characterised in that the arm (1) has a side wall (4) perpendicular to the pivot shaft (2) and at least one flange (5, 6) parallel to said shaft and constituting said surface against which the arm (1) bears.

5. An anchoring device according to claim 4, characterised in that the pivot shaft (2) extends without clearance through one of the two elements consisting of the side wall (4) of the arm and the lever (8) and extends through the other of these two elements with a clearance in a direction perpendicular to the surface (5, 6) against which the arm (1) bears, the torsion bar (7) having a freedom of movement with respect to the side wall 4.

6. An anchoring device according to one of the claims 4 and 5, in which the arm (1) comprises a second side wall (17) parallel to the first side wall (4) which imparts thereto a box structure, characterised in that the lever (8) is disposed between the two side walls.

7. An anchoring device according to claim 6, characterised in that the lever (8) acts as a brace between the two side walls (4, 17).

**Patentansprüche**

1. Vorrichtung zur Befestigung eines Torsionsstabes an einem aus Blech bestehenden Arm, der um eine fest mit dem Fahrzeugrahmen verbundene Achse schwenkbar ist und parallel zu der des Torsionsstabes verläuft, mit einem verdrehfesten Hebel (8), welcher drehfest mit dem Ende des Torsionsstabes (7) verbunden und durch die Bewegungen des Armes (1) mitnehmbar ist, dadurch gekennzeichnet, daß der Hebel (8) sich auf mindestens einer Fläche (5, 6) des Armes (1) parallel zur Schwenkachse (2) des Armes abstützt und daß durch den Hebel (8) die Achse des Armes mit geringem oder ohne Spiel in einer Richtung parallel zu dieser Fläche hindurchgeht.

2. Vorrichtung nach Anspruch 1, dadurch gekennzeichnet, daß der Hebel (8) für jede Drehrichtung des Armes (1) einen Bereich (12, 14) zur Auflage auf einer Fläche (5, 6) des Armes parallel zur Schwenkachse (2) aufweist.

3. Vorrichtung nach den Ansprüchen 1 und 2, dadurch gekennzeichnet, daß der Hebel seitlich durch Befestigungselemente (15) des Armes auf der Schwenkachse (2) gehalten ist.

4. Vorrichtung nach den Ansprüchen 1 bis 3, dadurch gekennzeichnet, daß der Arm (1) einen Flansch (4) senkrecht zur Schwenkachse (2) und mindestens einen umgebogenen Rand (5, 6) parallel zu dieser Achse, der die Auflagefläche für den Arm (1) bildet, aufweist.

5. Vorrichtung nach Anspruch 4, dadurch gekennzeichnet, daß die Schwenkachse (2) spielfrei durch eines der beiden durch den Flansch (4) des Arms und den Hebel (8) gebildeten Elemente sowie durch das andere der beiden Elemente mit einem Spiel senkrecht zur Auflagefläche (5, 6) des Arms (1) hindurchgeht, wobei der Torsionsstab (7) in bezug auf den Flansch (4) einen Spielraum aufweist.

6. Vorrichtung nach den Ansprüchen 4 und 5, bei welcher der Arm einen zweiten Flansch parallel zum ersten aufweist, dadurch gekennzeichnet, daß der Hebel (8) zwischen den beiden Flanschen (4, 17) angeordnet ist.

7. Vorrichtung nach Anspruch 6, dadurch gekennzeichnet, daß der Hebel (8) als Steg zwischen den Flanschen (4, 17) dient.

FIG.1

FIG.2

FIG.3

FIG.4

FIG.5